# DEMANDE DE BREVET EUROPEEN

(11) **EP 2 555 139 A1**
(43) Date de publication de la demande: **06.02.2013**
(21) Numéro de dépôt: 11306005.7
(22) Date de dépôt: 02.08.2011
(51) Int. Cl.: G06K 19/077, G06K 19/02

(54) **Document sécurisé comprenant un dispositif d'identification radiofréquence.**

(71) Demandeur: Gemalto SA, 92197 Meudon Cedex (FR)
(72) Inventeur: Alleysson, Blandine, 92197 MEUDON (FR); Bouquet, Christophe, 92197 MEUDON (FR); Lacaze, Brigitte, 92197 MEUDON (FR)
(74) Mandataire: Cour, Pierre

(57) **Abrégé**

La présente invention concerne un document sécurisé (1) comprenant un support (7) intégrant un dispositif d'identification radiofréquence (11 ; 13), ledit support (7) comportant au moins une fente (15).

## Description

La présente invention concerne les documents sécurisés comprenant un dispositif d'identification radiofréquence et plus particulièrement les documents sécurisés comprenant un dispositif d'identification radiofréquence avec protection renforcée dudit dispositif d'identification radiofréquence.

Les dispositifs d'identification radiofréquence (RFID) sans contact sont de plus en plus utilisés pour la sécurisation de documents, notamment en intégrant ces dispositifs RFID à l'intérieur même du document. Un dispositif RFID sans contact est un dispositif constitué d'une antenne et d'une puce connectée aux bornes de l'antenne. La puce n'est généralement pas alimentée et reçoit son énergie par couplage électromagnétique entre l'antenne du lecteur et l'antenne du dispositif RFID, des informations sont échangées entre le dispositif RFID et le lecteur et en particulier les informations stockées dans la puce qui ont par exemple trait à l'identification du possesseur du document ou d'autre types d'informations concernant le document sur lequel se trouve le dispositif.

Ainsi, des documents sécurisés comme les passeports par exemple peuvent incorporer des dispositifs RFID pour l'identification du possesseur du document. Dans le cas d'un passeport, la mémoire de la puce contient des informations telles que l'identité du possesseur du passeport, son pays d'origine, sa nationalité, les visas des différents pays visités, les dates d'entrée, les restrictions de circulation, les éléments biométriques, etc.

Le dispositif RFID est généralement fabriqué indépendamment du document pour être incorporé ensuite par collage entre la couverture et la page de garde inférieure par exemple du passeport. Le dispositif RFID comprenant l'antenne et la puce connectés ensemble est intégré alors à un support en papier, en plastique ou autre (appelé communément en anglais « inlay »).

De tels types de documents sont des documents souples et subissent des contraintes de torsions ou de flexions qui peuvent être tolérés par le dispositif RFID logé en leur sein sans l'endommager du moment que ces contraintes entrainent une simple courbure du document et du support. Cependant, si les contraintes sont trop importantes, la souplesse du document n'est plus assez suffisante et la courbure se transforme en cassure ou pliure qui peut endommager le dispositif RFID. Cela est d'autant plus vrai dans le cas où le document se présente sous forme de livret comme un passeport et donc présentant une reliure beaucoup plus rigide, pouvant entrainer une pliure ou cassure beaucoup plus facilement en cas de flexion perpendiculaire à ladite reliure.

Ainsi, un des buts de l'invention est de fournir un document sécurisé comprenant un dispositif d'identification radiofréquence permettant une meilleure protection dudit dispositif d'identification radiofréquence en cas de pliure.

La présente invention concerne donc un document sécurisé comprenant un support intégrant un dispositif d'identification radiofréquence, ledit support comportant au moins une fente.

Selon un aspect de l'invention, la au moins un fente est réalisée par incision sur le support à proximité du dispositif d'identification radiofréquence.

Selon un autre aspect de l'invention, la au moins un fente a une longueur supérieure ou égale à la taille du dispositif d'identification radiofréquence.

Selon un autre aspect de l'invention, la au moins une fente a une longueur inférieure à la taille du dispositif d'identification radiofréquence.

Selon un autre aspect de l'invention, la au moins une fente de décharge de contrainte a une forme courbée autour du dispositif d'identification radiofréquence.

Selon un autre aspect de l'invention, le document sécurisé se présente sous la forme d'un livret avec une charnière.

Selon un autre aspect de l'invention, le moyen de décharge de contrainte est situé entre la charnière et le dispositif d'identification radiofréquence.

Selon un autre aspect de l'invention, le document sécurisé est un passeport électronique.

D'autres caractéristiques et avantages de l'invention apparaîtront plus clairement à la lecture de la description suivante, donnée à titre d'exemple illustratif et non limitatif, et des dessins annexés parmi lesquels
- les figures 1a et 1b montrent une représentation schématique du comportement d'un document sécurisé en fonction des contraintes de flexions qui lui sont appliquées,
- les figures 2a et 2b montrent une représentation schématique en vue de dessus du comportement de la pliure d'un document sécurisé avec et sans l'objet de l'invention,
- la figure 3 montre une représentation schématique en vue de coupe d'un document sécurisé selon l'invention.

Les éléments identiques sur les différents dessins portent des numéros de références identiques.

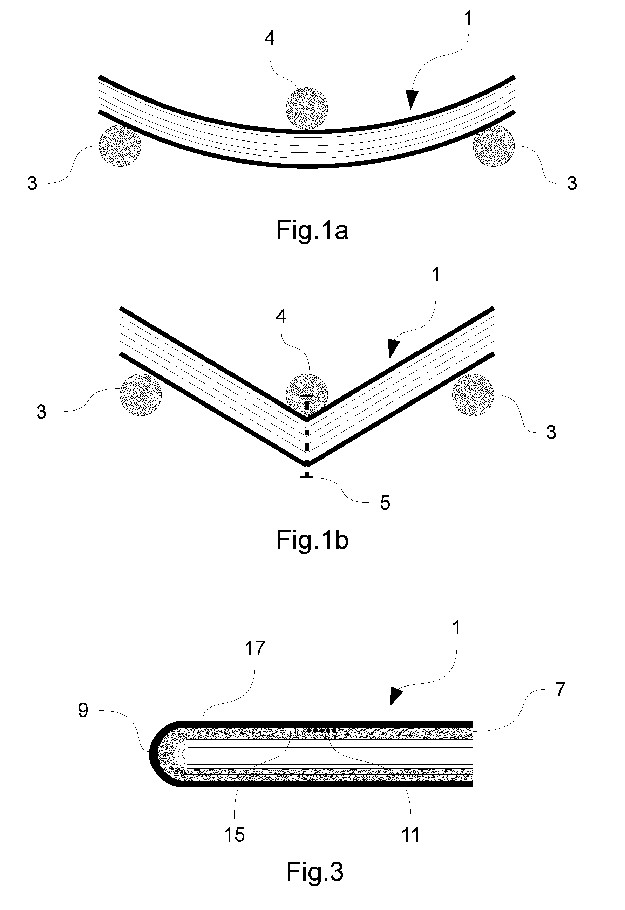

Les figures 1a et 1b montrent le comportement d'un document sécurisé 1, présenté sous forme d'un livret, en fonction de contraintes de flexions. Le document sécurisé 1 est en appui sur deux plots 3 et une pression est appliquée par un plot 4.

Sur la figure 1a, la pression appliquée par le plot 4 est inférieure à la tolérance de déformation du document sécurisé 1 et ce dernier se courbe simplement.

Sur la figure 1b, la pression appliquée par le plot 4 est supérieure à la tolérance de déformation du document sécurisé 1 et ce dernier subit une cassure ou pliure 5. Une pliure 5 peut également se former du fait de l'application répétée d'une pression inférieure à la tolérance de déformation du document sécurisé 1.

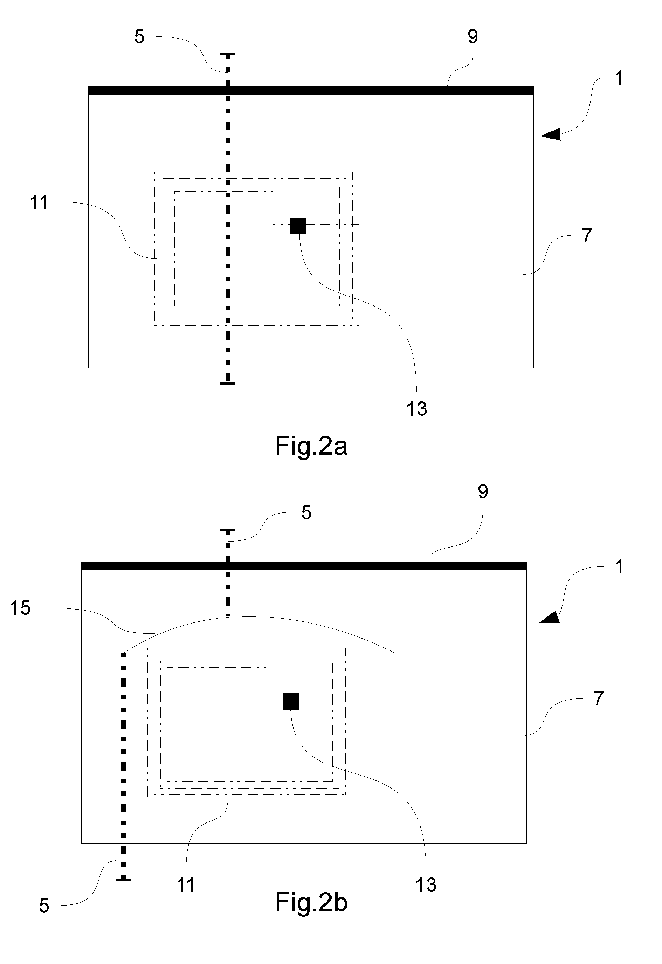

La figure 2a montre les effets d'une telle pliure 5 dans le cas d'un document sécurisé 1 sous forme d'un livret, comportant une charnière 9.

Le fait que le document sécurisé 1 ait une charnière 9 diminue sa tolérance de déformation dans le cas de contraintes de flexion perpendiculaires à ladite charnière 9, provoquant ainsi une pliure 5 plus aisément.

Dans le cas d'un document sécurisé 1 présentant un dispositif d'identification radiofréquence (RFID) 11 ; 13 sans contact, intégré dans un support 7, bien connu de l'homme du métier, la pliure 5 peut passer par l'antenne 11 ou la puce électronique 13 et les endommager voir même sectionner l'antenne 11 et ainsi rendre inopérant le dispositif RFID 11 ; 13.

Un exemple de document sécurisé 1 peut être le passeport électronique qui utilise notamment la technologie des dispositifs RFID intégrés dans la couverture pour stocker des données sur le processeur dudit passeport électronique.

La figure 2b montre un document sécurisé 1 similaire à celui présenté par la figure 2a, c'est-à-dire sous forme d'un livret avec une charnière 9 et un dispositif RFID 11 ; 13 intégré dans un support 7.

Le document sécurisé 1 présente ici au moins une fente 15 sur le support 7 qui permet de décharger les contraintes appliquer par la pliure 5 et ainsi de dévier la pliure 5 afin de protéger le dispositif RFID.

La fente 15 est préférentiellement réalisée par incision du support 7 à proximité du dispositif RFID 11 ; 13. La figure 3 illustre ce cas montrant en vue de coupe une représentation schématique d'un document sécurisé 1, tel qu'un passeport électronique, avec un support 7 intégrant un dispositif RFID 11 ; 13 et une fente 15 réalisée sur ledit support 7, ainsi qu'une couverture 17.

La fente 15 peut être de plusieurs types, elle peut être totalement traversante du support 7 ou bien représenter une simple diminution de l'épaisseur dudit support 7, suffisante pour permettre une zone de fragilisation dans laquelle peut être guidée la pliure 5.

La fente 15 peut également être continue sur toute sa longueur ou bien n'être représentée que par une série de petites incisions en pointillés permettant de même une zone de fragilisation dans laquelle peut être guidée la pliure 5.

Afin de protéger le dispositif RFID 11; 13, la fente 15 peut être notamment placé entre la charnière 9 et le dispositif RFID 11 ; 13 puisque ladite charnière 9 est la portion du document sécurisé 1 qui a la plus faible tolérance de déformation et donc qui est la plus susceptible à entrainer une pliure 5.

Afin de dévier la pliure 5 plus efficacement, la fente 15 peut avoir préférentiellement une forme courbée autour du dispositif RFID 11 ; 13, comme montré sur la figure 2b et afin de protéger le plus efficacement ledit dispositif RFID 11 ; 13, ladite fente 15 de décharge de contrainte peut avoir préférentiellement une longueur supérieure ou égale à la taille du dispositif RFID 11; 13. Par taille du dispositif RFID 11; 13, on entend aussi bien sa longueur que sa largeur.

Bien entendu, la fente 15 peut également avoir une longueur inférieure à la taille du dispositif RFID 11 ; 13, par exemple lorsque ce dernier est situé proche d'une des bordures du document sécurisé 1, perpendiculaires à la charnière 9 et où il n'est nécessaire de dévier une pliure 5 que sur une faible longueur afin de protéger ledit dispositif RFID 11 ; 13.

La fente 15 peut également avoir différentes formes autres que celle courbée montrée par la figure 2b. Par exemple ladite fente 15 peut ainsi être droite, parallèle ou oblique par rapport au dispositif RFID 11 ; 13, ou encore présentant un angle de cassure sur sa longueur délimitant deux portions chacune dirigées d'un coté dudit dispositif RFID 11 ; 13.

De plus un même document sécurisé 1 peut contenir une ou plusieurs fentes 15 disposées parallèlement les unes aux autres.

Ainsi, on peut donc voir que le document sécurisé comportant au moins une fente permet une déviation d'une pliure autour d'un dispositif RFID protégeant ce dernier, ladite pliure ayant dans le cas contraire endommagé ledit dispositif RFID le rendant inopérant.

## Revendications

1. Document sécurisé (1) comprenant un support (7) intégrant un dispositif d'identification radiofréquence (11 ; 13), **caractérisé en ce que** ledit support (7) comporte au moins une fente (15).

2. Document sécurisé (1) selon la revendication 1, **caractérisé en ce que** la au moins une fente (15) est réalisée par incision sur le support (17) à proximité du dispositif d'identification radiofréquence (11 ; 13).

3. Document sécurisé (1) selon la revendication 1, **caractérisé en ce que** la au moins une fente (15) a une longueur supérieure ou égale à la taille du dispositif d'identification radiofréquence (11 ; 13).

4. Document sécurisé (1) selon la revendication 1, **caractérisé en ce que** la au moins une fente (15) a une longueur inférieure à la taille du dispositif d'identification radiofréquence (11 ; 13).

5. Document sécurisé (1) selon la revendication 1, **caractérisé en ce que** la au moins une fente (15 a une forme courbée autour du dispositif d'identification radiofréquence (11 ; 13).

6. Document sécurisé (1) selon la revendication 1, **caractérisé en ce que** ledit document sécurisé (1) se présente sous la forme d'un livret avec une charnière (9).

7. Document sécurisé selon la revendication 6, **caractérisé en ce que** la au moins une fente (15) est situé entre la charnière (9) et le dispositif d'identification radiofréquence (11 ; 13).

8. Document sécurisé (1) selon la revendication 6, **caractérisé en ce que** ledit document sécurisé (1) est un passeport électronique.
